# FASCICULE DE BREVET EUROPEEN

(11) **EP 2 004 741 B1**
(45) Date de publication et mention de la délivrance du brevet: **06.01.2010**
(21) Numéro de dépôt: 07724189.1
(22) Date de dépôt: 12.04.2007
(51) Int. Cl.: C08K 3/34, C08K 3/22, C08K 3/26, C08K 9/06, C08K 13/02, H01B 3/46, C08K 3/00, H01B 7/295

(54) **COMPOSITIONS POLYORGANOSILOXANES VULCANISABLES A CHAUD UTILISABLES NOTAMMENT POUR LA FABRICATION DE FILS OU CABLES ELECTRIQUES**
HEISSVULKANISIERBARE POLYORGANOSILOXANZUSAMMENSETZUNGEN, DIE INSBESONDERE ZUR HERSTELLUNG VON ELEKTRISCHEN KABELN ODER DRÄHTEN VERWENDBAR SIND
HOT-VULCANIZABLE POLYORGANOSILOXANE COMPOSITIONS USEFUL PARTICULARLY FOR MANUFACTURING ELECTRICAL CABLES OR WIRES

(30) Priorité: 12.04.2006 FR 0603231
(43) Date de publication de la demande: 24.12.2008
(73) Titulaire: Bluestar Silicones France, 69486 Lyon Cedex 03 (FR)
(72) Inventeur: GEORGE, Catherine, 69290 Saint Genis-les-Ollières (FR); POUCHELON, Alain, 69300 Meyzieu (FR); THIRIA, Rémi, 69006 LYON (FR)
(86) Numéro de dépôt international: PCT/EP2007/003248
(87) Numéro de publication internationale: WO 2007/115834

(56) Documents cités:
- EP-A- 0 808 867
- EP-A1- 0 902 440
- WO-A-2004/064081
- WO-A-2005/054352
- US-A- 3 996 188
- US-A- 4 419 474
- US-A- 4 677 141
- "Burgess Pigment in Paint"[Online] 2005, XP002411754 Extrait de l'Internet: URL:http://www.tavcochem.com/paint/burgess .htm> [extrait le 2006-12-15]

## Description

La présente invention concerne des compositions polyorganosiloxanes vulcanisables à chaud en élastomères silicones, c'est-à-dire vulcanisables à des températures de la matière généralement comprises entre 100° et 200°C et pouvant au besoin aller jusqu'à 250°C. L'invention concerne encore l'utilisation de ces compositions pour notamment la réalisation par extrusion des enveloppes ou isolants primaires entrant dans la constitution de fils ou câbles électriques protégés contre l'incendie. L'invention concerne enfin les fils ou câbles électriques protégés contre l'incendie qui sont fabriqués moyennant l'utilisation de pareilles compositions.

Par l'expression "fils ou câbles électriques protégés contre l'incendie", on entend définir des fils ou câbles électriques qui doivent garantir un comportement au feu de haute qualité en termes, au moins, de cohésion des cendres et d'opacité des fumées. Les caractéristiques que doivent présenter les fils ou câbles électriques protégés contre l'incendie, font l'objet de réglementations légales dans de nombreux pays et des normalisations rigoureuses ont été établies.

Un câble électrique est constitué, selon la technique antérieure connue, d'un ou plusieurs monoconducteur(s) (en général à base de Cu ou d'Al) ; chacun de ces monoconducteurs est protégé par une enveloppe ou isolant primaire fait d'une ou plusieurs couche(s) concentrique(s) à base d'élastomère silicone. Autour de cette enveloppe ou de ces enveloppes (dans le cas d'un câble à plusieurs monoconducteurs) est (sont) prévu(s) un ou plusieurs élément(s) de remplissage et/ou un ou plusieurs élément(s) de renfort à base notamment de fibres de verre et/ou de fibres minérales. Puis on procède ensuite au gainage extérieur pouvant comprendre une ou plusieurs gaine(s). Dans le cas d'un câble électrique à plusieurs monoconducteurs, le (ou les) élément(s) de remplissage et/ou le (ou les) élément(s) de renfort, qui est (sont) disposé(s) autour des monoconducteurs (équipés chacun de son isolant primaire), constitue(nt) une enveloppe commune à l'ensemble des monoconducteurs. Bien que l'élastomère silicone entrant dans la constitution des câbles soit essentiellement le matériau constitutif du (ou des) isolant(s) primaire(s), il peut être présent aussi, en proportions variables : dans le (ou les) élément(s) de remplissage et/ou dans le (ou les) élément(s) de renfort (constituant l'enveloppe commune dans le cas d'un câble à plusieurs monoconducteurs) ; et/ou dans la (ou les) gaine(s) extérieure(s).

Le nombre de couche(s) concentrique(s) à base d'élastomère silicone, constituant l'enveloppe ou isolant primaire de chaque monoconducteur, et l'épaisseur de paroi de chaque couche vont dépendre essentiellement des exigences imposées pour le maintien du fonctionnement selon les dispositions des normes. De manière générale, il est souhaitable d'obtenir un pareil fonctionnement moyennant l'utilisation d'une ou de deux couches ayant chacune, de façon appropriée, une épaisseur égale à au moins 0,5 mm et, de préférence, à au moins 0,8 mm.

En France, par exemple, une norme importante relative aux essais de tenue au feu des câbles électriques, qu'il convient de satisfaire, est la norme NF C 32-070 CR1 qui concerne la durée de fonctionnement des câbles brûlant dans des conditions définies. La résistance au feu est à mettre sur le compte de la production de cendres qui doivent présenter une certaine cohésion permettant de conserver un isolement suffisant pour le fonctionnement des câbles. Dans cet essai, chaque échantillon de câble est positionné dans un tube métallique qui lui-même est ensuite placé dans un four dont la température atteint 920°C en 50 minutes et cette température est maintenue ensuite pendant 15 minutes ; durant cet essai, l'échantillon de câble est soumis à des chocs réguliers (par l'intermédiaire d'une barre de choc qui tape sur le tube métallique à raison de deux coups par minute) ; l'essai est réussi si des lampes témoins, branchées sur le câble alimenté à une tension nominale, ne sont pas éteintes à la fin de la durée de l'essai (c'est-à-dire au bout de 65 minutes) ; la norme est satisfaite si au moins 80% en nombre des essais réalisés sont réussis.

Une autre norme importante relative aux essais de tenue au feu, qu'il convient aussi de satisfaire, est la norme internationale CEI 61 034, parties 1 et 2 (CEI est l'abréviation de l'expression : Commission Electrotechnique Internationale), qui concerne la mesure de l'opacité des fumées dégagées par des câbles électriques brûlant dans des conditions définies. Dans cet essai, on mesure la transmission de lumière dans une petite chambre de 27 m³ obscurcie par les fumées produites en faisant brûler des tronçons de câbles sous l'action d'une flamme d'alcool installée dans des conditions définies. La norme est satisfaite si au moins 60 % de transmission de lumière est obtenue.

Les normes précitées ne peuvent être satisfaites que pour des fils ou câbles électriques dont au moins les matériaux isolants primaires ont été particulièrement étudiés vis-à-vis de leur non-propagation de l'incendie. En pratique, selon la technique antérieure connue, il a été constaté que les matériaux primaires isolants à base d'élastomères silicones obtenus par vulcanisation à chaud de compositions polyorganosiloxanes appropriées, peuvent satisfaire aux essais de non-propagation de la flamme. Lorsque l'élastomère silicone brûle, il se transforme en une substance cendreuse isolante ayant une certaine cohésion et il émet des fumées blanches qui proviennent de l'auto-inflammation des résidus volatils produits par la dégradation de l'élastomère.

Dans l'art antérieur, il a été décrit des compositions polyorganosiloxanes vulcanisables à chaud en élastomères silicones comprenant un polymère polyorganosiloxane réticulant par une catalyse au péroxyde, des charges de type fondant et/ou de type lamellaire qui peuvent être associées ou non à du platine et à des oxydes métalliques afin de donner naissance, dans le cas d'un incendie, à la formation d'une substance cendreuse isolante et ayant une certaine cohésion ce qui permet d'allonger le temps de fonctionnement des câbles dans un incendie. On citera le document EP-A-0 467 800 qui propose l'utilisation à la fois de ZnO (à tire de fondant) et de mica (à titre de charge lamellaire), associée éventuellement à un composé du platine et/ou des oxydes métalliques comme par exemple l'oxyde de titane et l'oxyde Fe₃O₄.

A titre d'illustration de l'art antérieur, il est exposé dans la demande de brevet WO 01/34696 des compositions polyorganosiloxanes vulcanisables à chaud en élastomères silicones, contenant :
- 100 parties d'un ingrédient a) consistant dans au moins un polymère polyorganosiloxane;
- 5 à 80 parties d'au moins une charge de renforcement;
- 0,2 à 8 parties d'un péroxyde organique;
- 8 à 30 parties de mica;
- 6 à 20 parties d'oxyde de zinc;
- 0 à 15 parties d'au moins un additif habituellement utilisé dans le domaine des compositions polyorganosiloxanes vulcanisables à chaud;
lesdites compositions étant **caractérisées en ce qu**'elles contiennent en plus, à titre d'autres ingrédients obligatoires :
- 0,0010 à 0,02 partie de platine, un composé du platine et/ou un complexe du platine ;
- 2 à 10 parties d'oxyde de titane ; et
- 50 à 120 parties d'un ingrédient i) consistant dans au moins une charge de bourrage.

D'autres compositions sont exposées dans la demande de brevet WO01/34705 qui décrit des compositions polyorganosiloxanes vulcanisables à chaud en élastomères silicones ayant un comportement au feu amélioré, contenant :
a) au moins un polymère polyorganosiloxane ;
b) au moins une charge de renforcement ;
c) un péroxyde organique ;
d) du mica ;
e) de l'oxyde de zinc ;
f) éventuellement au moins un additif habituellement utilisé dans le domaine des compositions polyorganosiloxanes vulcanisables à chaud ;
   lesdites compositions étant **caractérisées en ce qu**'elles contiennent en plus, à titre d'autres ingrédients obligatoires :
g) du platine, un composé du platine et/ou un complexe du platine ;
h) de l'oxyde de titane ;
i) au moins une charge de bourrage ; et
j) au moins une espèce minérale appartenant au groupe de la wollastonite.

Enfin, la demande de brevet WO2004/064081 décrit l'utilisation de compositions polyorganosiloxanes vulcanisables à chaud en élastomères silicones contenant :
a) au moins un polymère polyorganosiloxane ;
b) au moins une charge de renforcement ;
c) un péroxyde organique ;
d) du mica ;
e) de l'oxyde de zinc ;
f) éventuellement au moins un additif habituellement utilisé dans le domaine des compositions polyorganosiloxanes vulcanisables à chaud ;
g) du platine, un composé du platine et/ou un complexe du platine ;
h) de l'oxyde de titane ; i) au moins une charge de bourrage ; et
j) éventuellement au moins une espèce minérale appartenant au groupe de la wollastonite,
lesdites compositions étant **caractérisées en ce que** les charges de bourrage i) consistent dans des poudres d'hydroxyde d'aluminium Al(OH)₃ traitées en surface.

Toutefois, de pareilles compositions polyorganosiloxanes vulcanisables à chaud en élastomères silicones proposées jusqu'ici ne sont pas totalement satisfaisantes notamment sur le plan de la préparation et de la mise en oeuvre de telles compositions. En effet, ces compositions ont le désavantage de présenter des propriétés de collant compliquant ainsi leur manipulation (ou « leur processabilité ») lors d'une préparation industrielle ou de leurs mise en oeuvre par extrusion dans le cadre de la fabrication de fils ou câbles électriques. De plus, un compromis est toujours recherché en terme de céramisation, de faible opacité des fumées dégagées par des câbles électriques brûlant, des propriétés mécaniques avant et après vieillissement et de facilité de mise en oeuvre (ou « processabilité ») du produit.

Un but de la présente invention est donc la mise au point de compositions polyorganosiloxanes vulcanisables à chaud en élastomères silicones qui soient capables, déjà quand elles sont utilisées pour la seule réalisation de l'isolant primaire, de conférer aux fils et câbles électriques un comportement au feu de très haute qualité marqué, au moins, par la réalisation des points suivants :
- une bonne cohésion des cendres permettant d'une part, pour toutes les compositions selon l'invention, de satisfaire à la norme "NF C 32-070 CR1" sous 500 volts; et
- une bonne aptitude à maintenir une faible opacité des fumées permettant d'atteindre, de manière générale, l'objectif de plus de 80 % de transmission selon la norme CEI 61 034, parties 1 et 2 ;
ceci avec une mise en oeuvre aisée de la composition polyorganosiloxane qui ne présente plus les propriétés de collants néfastes de l'art antérieur, permettant ainsi une manipulation plus aisée, ce qui est un avantage important pour une fabrication industrielle.

Un autre but de la présente invention est aussi la mise au point de compositions polyorganosiloxanes vulcanisables à chaud qui, tout en possédant une tenue améliorée à la combustion, possèdent simultanément de bonnes propriétés mécaniques à l'état non recuit comme à l'état recuit et, en particulier, après un vieillissement de 10 jours à 200°C opéré selon la norme câble CEI 2 (en matières notamment: de dureté SHORE A, de résistance à la rupture, d'allongement à la rupture et de module élastique).

Il a maintenant été trouvé, et c'est ce qui constitue le premier objet de la présente invention, des compositions polyorganosiloxanes vulcanisables à chaud en élastomères silicones, utilisables notamment dans le domaine de la fabrication de fils ou câbles électriques ayant un comportement au feu amélioré par rapport à ce qui se passe en mettant en oeuvre l'enseignement de l'art antérieur, avec comme objectif celui de procéder au moins à la réalisation des améliorations expliquées ci-avant touchant à la cohésion des cendres et à l'opacité des fumées, tout en ayant de bonnes propriétés mécaniques pour les élastomères silicones formés.

Plus précisément, la présente invention, prise dans son premier objet, concerne une composition polyorganosiloxane vulcanisable à chaud en élastomère silicone, utilisable notamment dans le domaine de la fabrication de fils ou câbles électriques ayant un comportement au feu amélioré, comprenant:
a) au moins un polymère polyorganosiloxane ;
b) au moins une charge de renforcement ;
c) au moins un péroxyde organique;
d) du mica ;
e) de l'oxyde de zinc ;
f) éventuellement au moins un additif habituellement utilisé dans le domaine des compositions polyorganosiloxanes vulcanisables à chaud ;
g) du platine, un composé du platine et/ou un complexe du platine;
h) de l'oxyde de titane;
i) au moins une charge de bourrage;
j) éventuellement au moins une espèce minérale appartenant au groupe de la wollastonite, et
k) au moins une charge semi-renforçante k),
ladite composition étant **caractérisée en ce que** la charge semi-renforçante k) est choisie parmi le groupe constitué par:
- les poudres de kaolins calcinés, de préférence ayant subit un traitement chimique de surface,
- le talc,
- le carbonate de calcium traités ou non traités en surface, par exemple par des silanes vinylés, des silanes aminés ou des huiles silicones (réactives ou non), et
- leurs mélanges.

Ainsi la Demanderesse a découvert que l'utilisation d'une charge semi-renforçante spécifique k) dans la composition selon l'invention conduit à un bon compromis dans l'application fils ou câbles électriques et permet d'obtenir :
- de bonnes propriétés mécaniques de l'élastomère avant et après vieillissement (10 jours à 200°C),
- une bonne cohésion des cendres,
- une bonne aptitude à maintenir une faible opacité de fumées,
- une bonne extrudabilité, et
- une facilité de mise en oeuvre (ou « processabilité ») améliorée de la composition par rapport aux compositions de l'art antérieur.

Les kaolins sont des alumino-silicates comprenant majoritairement les espèces suivantes : Al₂O₃.2SiO₂.2H₂O. Les propriétés physiques du kaolin sont modifiées par un traitement (calcination) à hautes températures (700 à 1 200°C). La calcination accroît la blancheur des particules, les rend moins hydrophiles et réduit leur conductivité électrique. La nature du traitement chimique de surface des kaolins calcinés n'est pas restreinte avec une préférence pour des traitements à base d'huiles silicones (réactives ou non) ou de silanes vinylés ou aminés.
Sans être restrictif, leur densité est de l'ordre de 2.6, la surface spécifique est comprise entre 8 et 20m²/g et la taille de particule est comprise entre 0.5 et 1.5 µm.

Ainsi les compositions selon la présente invention comprennent au moins un polymère polyorganosiloxane a) contenant de 0 à 4 %, de préférence de 0,01 à 3 %, en poids, de groupement vinylé. Lorsque ces polymères polyorganosiloxanes a) ont des viscosités à 25°C comprises entre 50.000 et 1.000.000 mPa.s, elles sont appelées huiles, mais leur viscosité peut être supérieure à 1.000.000 mPa.s et elles sont appelées alors des gommes. Dans les compositions selon la présente invention, les polymères polyorganosiloxanes peuvent être des huiles ou des gommes ou des mélanges. Ces polymères polyorganosiloxanes sont des polymères linéaires, dont la chaîne diorganopolysiloxanique est constituée essentiellement de motifs de formule R₂SiO. Cette chaîne est bloquée à chaque extrémité par un motif de formule R₃Si_{0,5} et/ou un radical de formule OR'. Dans ces formules :
- les symboles R, identiques ou différents, représentent des radicaux hydrocarbonés monovalents tels que des : radicaux alkyles, par exemple, méthyle, éthyle, propyle, octyle, octadécyle ; des radicaux aryle, par exemple phényle, tolyle, xylyle ; des radicaux aralkyle tels que par exemple benzyle, phényléthyle ; des radicaux cycloalkyle et cycloalkényle tels que par exemple des radicaux cyclohexyle, cycloheptyle, cyclohexényle ; des radicaux alkényle, par exemple des radicaux vinyle, allyle ; des radicaux alkaryle, des radicaux cyanoalkyle tels que par exemple un radical cyanoéthyle ; des radicaux halogénoalkyle, halogénoalkényle et halogénoaryle, tels que par exemple des radicaux chlorométhyle, trifluoro-3,3,3 propyle, chlorophényle, dibromophényle, trifluorométhylphényle ;
- le symbole R' représente un atome d'hydrogène, un radical alkyle ayant de 1 à 4 atomes de carbone, le radical bétaméthoxy-éthyle.

De préférence, au moins 60 % des groupes R représentent des radicaux méthyle. La présence, le long de la chaîne diorganopolysiloxanique, de faibles quantités de motifs autres que R₂SiO, par exemple de motifs de formule RSiO_{1,5} et/ou SiO₂ n'est cependant pas exclue dans la proportion d'au plus 2 % (ces % exprimant le nombre des motifs T et/ou Q pour 100 atomes de silicium).

A titre d'exemples concrets de motifs de formules R₂SiO et R₃SiO_{0,5} et de radicaux de formule OR', peuvent être cités ceux de formules :
(CH₃)₂SiO, CH₃(CH₂=CH)SiO, CH₃(C₆H₅)SiO, (C₆H₅)₂SiO,
CH₃(C₂H₅)SiO, (CH₃CH₂CH₂) CH₃SiO, CH₃(n.C₃H₇)SiO,
(CH₃)₃SiO_{0,5}, (CH₃)₂(CH₂=CH)SiO_{0,5}, CH₃(C₆H₅)₂SiO_{0,5},
CH₃(C₆H₅) (CH₂=CH)SiO_{0,5},
OH, -OCH₃, -OC₂H₅, -O-n. C₃H₇, -O-iso.C₃H₇, -O-n.C₄H₉,
-OCH₂CH₂OCH₃.

Ces huiles et gommes sont commercialisées par les fabricants de silicone ou peuvent être fabriquées en opérant selon des techniques déjà connues.

La charge de renforcement b) consiste dans une silice de combustion, de précipitation ou un mélange de ces deux espèces. A titre de silice utilisables, on vise des charges caractérisées par une fine taille de particules souvent inférieure ou égale à 0,1 µm et un rapport élevé de la surface spécifique au poids, généralement compris dans l'intervalle d'environ 50 mètres carrés par gramme à plus de 300 mètres carrés par gramme. Les silices de ce type sont des produits disponibles dans le commerce et sont bien connues dans la technique de la fabrication des caoutchoucs de silicone. Ces silices peuvent être préparées par voie pyrogénique (silices dites de combustion ou de fumée) ou par des procédés humides (silices précipitées) et peuvent être traitées ou non traitées par des composés organosiliciques habituellement utilisées pour cet usage. La nature chimique et le procédé de préparation ne sont pas importants aux fins de la présente invention, pourvu que la silice soit capable d'exercer une action de renforcement dans l'élastomère fini. Bien entendu on peut utiliser aussi des coupages de différentes silices.

Le péroxyde organique constituant l'ingrédient c) peut être n'importe lequel de ceux qui agissent comme agents vulcanisants envers les compositions formatrices d'élastomères de silicones. Il peut ainsi s'agir de l'un quelconque des péroxydes ou peresters qu'il est connu d'employer avec les élastomères de silicone, par exemple le péroxyde de ditertiobutyle, le péroxyde de benzoyle, le péroxyde de monochlorobenzoyle, le péroxyde de 2-4 dichlorobenzoyle, le peracétate de tertiobutyle, le péroxyde de dicumyle, le 2,5-diperbenzoate de 2,5-diméthylhexane et le bis(t-butylpéroxy)-2,5 diméthyl-2,5 hexane. Lors de la fabrication de câbles ou de fils électriques par extrusion, le choix du péroxyde dépendra en pratique du procédé employé pour durcir l'élastomère (procédé de vulcanisation). Quand le procédé de vulcanisation fonctionne en absence de pression (par exemple, four à air chaud et/ou rayonnement (infra-rouge), le péroxyde utilisé est alors de préférence le péroxyde de monochlorobenzoyle et/ou le péroxyde de 2,4-dichlorobenzoyle. Quand le procédé de vulcanisation fonctionne en présence de pression (par exemple, tube vapeur), le péroxyde utilisé est alors de préférence le bis(t-butylpéroxy)-2,5 diméthyl-2,5 hexane.

Le mica qui constitue l'ingrédient d) des compositions de la présente invention peut être de type muscovite ou de type phlogopite et la grosseur des particules de mica n'est pas spécialement critique, pourvu qu'elle soit suffisamment petite pour permettre une dispersion uniforme dans les ingrédients de la composition. Le mica est apporté de préférence sous forme de mica pulvérisé ou de farine de mica ayant des particules de dimension inférieure à 100 µm.

L'oxyde de zinc qui constitue l'ingrédient e) des compositions selon la présente invention est une poudre blanche ou légèrement jaunâtre.

Le platine, ingrédient g), peut être : sous forme de platine métallique (élémentaire) ; ou sous forme notamment d'acide chloroplatinique (par exemple l'acide hexachloroplatinique H₂PtCl₆) ; ou sous forme de complexes du platine et de produits organiques : comme notamment les complexes du platine et d'organosiloxanes vinylés (par exemple le complexe de Karstedt), les complexes tels que ceux de formule (PtCl₂, oléfine)₂ et H(PtCl₃, oléfine) où l'oléfine représente l'éthylène, le propylène, le butylène, le cyclohexène ou le styrène, les complexes de chlorure de platine et de cyclopropane.

L'oxyde de titane h) est une poudre blanche.

La charge de bourrage i) est le plus généralement une silice cristalline, une alumine ou un mélange de ces deux espèces. A titre d'alumine, on emploie avantageusement une alumine hautement dispersible, dopée ou non de manière connue. Bien entendu, on peut utiliser aussi des coupages de différentes alumines. Comme exemples non limitatifs de pareilles alumines, on citera les alumines A 125, CR 125, D 65CR de la société BAÏKOWSKI ou les alumines (par exemple AP 40 VS1) de la société NABALTEC.
Une silice cristalline présente souvent une taille de particules supérieure à 0,1 µm. On entend par silice cristalline le quartz broyé et les silices de diatomées. Bien entendu, on peut utiliser aussi des coupages de différentes silices cristallines. De préférence, la charge de bourrage i) est du quartz broyé.

Les compositions selon la présente invention contiennent encore, à titre d'ingrédient optionnel, au moins une espèce minérale j) appartenant au groupe de la wollastonite. Le groupe de la wollastonite comprend les espèces minérales suivantes : le métasilicate de calcium (CaSiO₃) ou wollastonite ; le métasilicate mixte de calcium et de sodium (NaCa₂HSi₃O₉) ou pectolite ; et le métasilicate mixte de calcium et de manganèse [CaMn(SiO₃)₂] ou bustamite. Bien entendu on peut utiliser un mélange de ces différentes espèces. De préférence, l'ingrédient j), quand on en utilise un, est une wollastonite. La wollastonite existe sous deux formes : la wollastonite elle-même, que les chimistes désignent par α-CaSiO₃, que l'on trouve couramment à l'état naturel ; et la pseudo-wollastonite ou β-CaSiO₃. De manière plus préférentielle, on utilise la wollastonite α-CaSiO₃. L'espèce minérale j) appartenant au groupe de la wollastonite peut être non traitée en surface ou traitée par un composé organosilicique du type de ceux mentionnés ci-avant à propos de la poudre d'hydroxyde d'aluminium.

En plus des ingrédients a), b), c), d), e), g), h), i) et j) spécifiés ci-avant, les compositions selon la présente invention peuvent contenir éventuellement en outre un ou plusieurs additif(s) auxilliaire(s) f) tel(s) que notamment : au moins un produit dit "antistructure" f1) ; et/ou au moins une résine polysiloxane f2) ; et/ou au moins un agent de stabilisation f3) ; et/ou au moins un pigment f4) pour fabriquer des fils et des câbles colorés ; et/ou au moins un composé à base de bore f5).

Conformément à une disposition préférée de l'invention, on vise une composition vulcanisable à chaud en élastomère silicone qui contient, sur la base de 100 parties en poids de polymère(s) polyorganosiloxane(s) a) :
- 15 à 100 parties de charge(s) de renforcement b),
- 0,2 à 8 parties de péroxyde organique c),
- 0,5 à 30 parties de mica d),
- 0,2 à 10 parties d'oxyde de zinc e),
- 0 à 15 parties d'additif(s) auxilliaire(s) f),
- 0,0005 à 0,02 parties d'ingrédient g) exprimé en poids de platine métal (élémentaire) (soit 5 ppm à 200 ppm),
- 0,5 à 10 parties d'oxyde de titane h),
- 20 à 100 parties de charge(s) de bourrage i),
- 0 à 10 parties d'espèce(s) j) appartenant au groupe de la wollastonite, et
- 1 à 100 parties de charge (s) semi-renforçante k), de préférence de 20 à 80 parties et encore plus préférentiellement de 40 à 70 parties,

Pour en revenir à (aux) additif(s) auxilliaire(s) f), quand on en utilise un ou plusieurs, il(s) est(sont) représenté(s) plus précisément par [pour 100 parties en poids de polymère(s) polyorganosiloxane(s) a)] :
- 0,1 à 15 parties en poids d'un produit dit "antistructure" f1) à base d'huile(s) polydiméthylsiloxane(s) de viscosité comprise entre 10 et 3000 mPa.s à 25°C et bloquée(s) à chaque extrémité de chaîne par des groupements hydroxy et/ou d'huile(s) poly(méthylvinyl)siloxane de viscosité comprise entre 10 et 1000 mPa.s à 25°C et bloquée(s) à chaque extrémité de chaîne par des groupements hydroxy ; et/ou
- 0,1 à 5 parties de résine(s) polysiloxane(s) f2) représentée(s) par : des résines dites MQ comprenant essentiellement des unités R"'₃SiO_{0,5} et SiO_{4/2} dans lesquelles R"' représente des groupements hydrocarbonés monovalents éventuellement halogénés ayant moins de 7 atomes de carbone, le rapport pondéral R"'₃SiO_{0,5} sur SiO_{4/2} étant compris entre 0,5/1 et 1/2/1 ; des résines M'Q comprenant essentiellement des unités HR"'₂SiO_{0,5} et SiO₂ dans lesquelles R'" a la signification donnée ci-dessus, le rapport pondéral HR"'₂SiO_{0,5} sur SiO₂ étant compris entre 0,5/1 et 10/1 ; et/ou
- 0,01 à 4 parties d'agent(s) de stabilisation f3) tels que notamment : un sel métallique d'acide organique, comme un sel de fer ou de cérium, par exemple l'octoate de fer ou de cérium (proportions allant plus spécifiquement de 0,01 à 1 partie) ; un oxyde de cérium, un hydroxyde de cérium, un oxyde de fer (proportions allant plus spécifiquement de 0,1 à 4 partiels) ; l'oxyde CaO, l'oxyde MgO (proportions allant plus spécifiquement de 0,01 à 0,4 parties ; et/ou
- 0,01 à 5 parties de pigment(s) coloré(s) f4) ; et/ou
- 0,01 à 3 parties de composé(s) f5) à base de bore, comme l'acide borique et ses dérivés, par exemple du type ester d'alkyle ayant de 1 à 3 atomes de carbone ;
- la quantité totale d'additif(s), quand on en utilise un ou plusieurs, devant être égale : à 15 parties en poids dans le cas des compositions prises en général ; à 12 parties dans le cas des compositions dites "préférées" ; et à 10 parties dans le cas des compositions dites "plus préférées".

Selon un mode préféré de l'invention, l'hydroxyde de cérium est présent à raison de 0,1 à 10 parties afin d'améliorer la cohésion des cendres.

Pour la préparation des compositions selon l'invention, les divers ingrédients sont intimement mélangés au moyen des dispositifs bien connus dans l'industrie des élastomères silicones, l'ordre d'incorportation pouvant être quelconque.
En outre l'invention, dans un second objet, porte sur l'utilisation des compositions polyorganosiloxanes qui viennent d'être décrites pour la réalisation, notamment, des enveloppes ou isolants primaires des monoconducteurs entrant dans la constitution des fils ou câbles électriques protégés contre l'incendie.

L'invention, dans un troisième objet, porte sur les fils ou câbles électriques qui sont fabriqués moyennant l'utilisation des compositions polyorganosiloxanes selon le premier objet de l'invention.

Dans le cadre de pareille utilisation, le dépôt d'une composition selon l'invention autour de chaque monoconducteur peut s'effectuer selon les procédés usuels, notamment par des procédés d'extrusion. Le dépôt ainsi obtenu est ensuite réticulé par chauffage pour conduire à la formation de l'isolant primaire en élastomère silicone. La durée du chauffage varie évidemment avec la température de la matière et la pression éventuelle de travail. La température de la matière se situe généralement dans l'intervalle allant de 100°C à 200°C. Il est possible de déposer plusieurs couches conjointement à l'aide d'une extrusion en tandem équipée par exemple d'une tête d'équerre ou d'une co-extrusion.

L'invention concerne aussi l'utilisation des compositions polyorganosiloxanes selon le premier objet de l'invention pour la réalisation d'enveloppe ou isolant primaire de monoconducteur(s) entrant dans la constitution de fils ou câbles électriques protégés contre l'incendie, qui consiste à opérer le dépôt de ladite composition autour de chaque monoconducteur, puis à la faire réticuler en élastomère silicone par un chauffage procurant une température matière allant de 100°C à 200°C. L'invention concerne aussi les fils ou câbles électriques protégés contre l'incendie fabriqués moyennant l'utilisation des compositions polyorganosiloxanes telle que décrite ci-dessus.

Les fils ou câbles électriques selon l'invention offrent une faible opacité de fumées permettant d'atteindre l'objectif de plus de 80 % de transmission de la lumière selon la norme CEI 61 034, partie 1 et satisfont à la norme "NFC 32-070 CR1" sous 500 volts.

D'autres détails ou avantages de l'invention apparaîtront plus clairement au vu des exemples donnés ci-dessous uniquement à titre indicatif.

### EXEMPLE et EXEMPLE COMPARATIF A :

### 1. Composition selon l'invention (toutes les parties sont données en poids) :

### 1.1 - Préparation :

Dans un pétrin malaxeur à bras en Z, on mélange pendant 2 heures à température ambiante (23°C) :
- 65 parties d'un polyorganosiloxane a) qui est un polydiméthylsiloxane bloqué à chacune de ses deux extrémités par un motif diméthylvinylsiloxy, contenant 120 ppm de groupes vinylés (Vi), ayant une viscosité de 20 millions de mPa.s à 25°C ;
- 35 parties d'un polyorganosiloxane a) qui est un poly(diméthyl)(méthylvinyl)-siloxane bloqué à chacune de ses deux extrémités par un motif triméthylsiloxy, contenant dans la chaîne 720 ppm de groupes Vi, ayant une viscosité de 20 millions de mPa.s à 25°C ;
- 20 parties de silice de combustion traitée D₄ (octaméthylcyclotétrasiloxane) b) de surface spécifique de 200 m²/g ;
- 13 parties de silice de combustion b) de surface spécifique de 150 m²/g ;
- 3 parties d'une huile polydiméthylsiloxane f1) bloquée à ses deux extrémités par des motifs diméthylhydroxysiloxy, contenant 9 % en poids d'hydroxyle OH, de viscosité 50 mPa.s à 25°C ;
- 2 parties d'une huile poly(méthyvinyl)siloxane f1) bloquée à ses deux extrémités par des motifs méthylvinylhydroxysiloxy, contenant 9 % en poids d'OH et, dans la chaîne, 3 % en poids de groupes Vi, de viscosité 25 mPa.s à 25°C ;
- 1,8 parties de mica de type muscovite d) ;
- 5 parties d'oxyde de zinc e) ;
- 2.8 parties de TiO₂ de combustion h) :

- 3.5 parties de wollastonite α-CaSiO₃ j) traitée avec un méthylalkoxysilane commercialisée par la Société QUARTZ WERKE sous la dénomination Wollastonite Tremin 283-800 TST ;
- 0,0025 parties de platine métal g), apporté sous la forme d'une solution dans le divinyltétraméthyldisiloxane d'un complexe du platine à 10 % en poids de platine ligandé par du divinyltétraméthyldisiloxane (complexe de karstedt) ;
- 0,29 parties d'oxyde de calcium f3) ;
- 0,4 parties d'octoate de fer f3) ;
- 2 parties de Ce(OH)₄ f3) et
- 48.5 parties de charge i) qui est du quartz broyé, commercialisé par la Société SIFRACO (Paris, France) sous la dénomination E600 ;
- 41,6 parties de charge k) qui est du kaolin calciné traité en surface par un amino silane, commercialisé par la Société Burgess (USA) sous la dénomination de B2211.

Le mélange obtenu ci-avant est alors travaillé sur un mélangeur à 2 cylindres et on lui ajoute le péroxyde organique constituant le catalyseur c).

### 1.2.- Caractérisation de la composition :

Une fraction de la masse homogène obtenue dans le malaxeur est catalysée avec 1,5 parties de péroxyde de 2-4 dichlorobenzoyle pour 100 parties de masse homogène. Elle est ensuite découpée sous forme de bandes qui vont alimenter l'extrudeuse mise en oeuvre pour la fabrication d'un câble électrique. La fabrication du câble est une construction standard consistant à réaliser un câble de 3 mm de diamètre comprenant un monoconducteur en cuivre de 1,38 mm de diamètre, autour duquel est installé une enveloppe ou isolant primaire en élastomère silicone ayant une épaisseur de 0,81 mm, qui est obtenu en soumettant le monoconducteur revêtu de la composition polyorganosiloxane homogène précitée à une vulcanisation opérée dans un four à air chaud, à une température de l'ordre de 250°C (procurant une température matière de l'ordre de 130°C - 140°C), pendant 46 secondes. On prélève ensuite sur le câble des échantillons normalisés et mesure les propriétés suivantes :
- cohésion des cendres sous 500 volts selon la norme "NF C 32-070 CR1", et
- opacité des fumées selon la norme CEI 61 034, partie 1, en % de transmission.

Cette masse homogène est aussi transformée dans un moule approprié à 115°C pendant 8 minutes afin d'obtenir des plaques de 2 mm d'épaisseur. On obtient ainsi des plaques à l'état non recuit (NR). On soumet ensuite une fraction des plaques à vieillissement (R) de 10 jours à 200°C. On prélève ensuite dans l'ensemble de ces plaques des échantillons normalisés et on mesure les propriétés suivantes :
- dureté Shore A (DSA) selon la norme DIN 53505,
- résistance à la rupture (R/R) en MPa selon la norme AFNOR NF T 46002,
- allongement à la rupture (A/R) en % selon la norme précédente, et
- module élastique (ME) à 100 % en MPa selon la norme précédente.

Les résultats obtenus sont reportés dans le Tableau 1 qui apparaît ci-après.

### 2. Composition de l'exemple comparatif :

### 2.1. Préparation :

Dans un pétrin malaxeur à bras en Z, on mélange pendant 2 heures à température ambiante (23°C) :
- 66,61 parties d'un polyorganosiloxane a) qui est un polydiméthylsiloxane bloqué à chacune de ses deux extrémités par un motif diméthylvinylsiloxy, contenant 120 ppm de groupes Vi, ayant une viscosité de 20 millions de mPa.s à 25°C ;
- 33,39 parties d'un polyorganosiloxane a) qui est un poly(diméthyl)(méthylvinyl)-siloxane bloqué à chacune de ses deux extrémités par un motif triméthylsiloxy, contenant dans la chaîne 720 ppm de groupes Vi, ayant une viscosité de 20 millions de mPa.s à 25°C ;
- 19,07 parties de silice de combustion traitée D₄ (octaméthylcyclotétrasiloxane) b) de surface spécifique de 200 m²/g ;
- 12,4 parties de silice de combustion b) de surface spécifique de 150 m²/g ;
- 2,86 parties d'une huile polydiméthylsiloxane f1) bloquée à ses deux extrémités par des motifs diméthylhydroxysiloxy, contenant 9 % en poids d'OH, de viscosité 50 mPa.s à 25°C ;
- 1,91 parties d'une huile poly(méthyvinyl)siloxane f1) bloquée à ses deux extrémités par des motifs méthylvinylhydroxysiloxy, contenant 9 % en poids d'hydroxyle OH et, dans la chaîne, 3 % en poids de groupes vinylés, de viscosité 25 mPa.s à 25°C ;
- 9,61 parties de mica de type muscovite d) ;
- 4,89 parties d'oxyde de zinc e) ;
- 3,46 parties de TiO₂ de combustion h) :
- 6,62 parties de wollastonite α-CaSiO₃ j) traitée avec un méthylalkoxysilane commercialisée par la Société QUARTZ WERKE sous la dénomination Wollastonite Tremin 283-800 TST ;
- 0,003 parties de platine métal g), apporté sous la forme d'une solution dans le divinyltétraméthyldisiloxane d'un complexe du platine à 10 % en poids de platine ligandé par du divinyltétraméthyldisiloxane (complexe de karstedt) ;
- 0,28 parties d'oxyde de calcium f3) ;
- 0,39 parties d'octoate de fer f3) ;
- 2,76 parties de Ce(OH)₄ f3) et
- 66,17 parties de charge i) qui est du trihydroxyde d'aluminium traité par 1 % en poids de vinyltri(2-méthoxyéthoxy)silane, commercialisé par la Société NABALTEC sous la dénomination Aluminium hydroxyde AP 40 VS1.

Le mélange obtenu ci-avant est alors travaillé sur un mélangeur à 2 cylindres et on lui ajoute le péroxyde organique c).

C'est au niveau des deux cylindres du mélangeur que l'on évalue la facilité de mise en oeuvre (ou « processabilité ») du mélange réalisé. Le mélange est évalué suivant l'échelle suivante :
0 = mélange très collant sur cylindre ne permettant pas de travailler sur cylindre ;
1-2 = collant, le mélange est difficilement mis en oeuvre sur cylindre ;
3-4 = légèrement collant ;
5 = non collant, le mélange est facilement mis en oeuvre sur cylindre.

### 2.2. Caractérisations de la composition :

On opère comme indiqué ci-avant au § 1.2.

**TABLEAU I.**

| | | Exemple (Invention) | Exemple comparatif |
|---|---|---|---|
| Propriétés mécaniques NR | | | |
| DSA | | 65 | 73 |
| R/R (MPa) | | 7.6 | 7.8 |
| A/R (%) | | 260 | 190 |
| ME 100 (Mpa) | | 3,6 | 5.1 |
| Propriétés mécaniques R | | | |
| DSA | | 68 | 74 |
| R/R (MPa) | | 7,5 | 6.6 |
| A/R (%) | | 185 | 150 |
| ME 100 (Mpa) | | 4,1 | 5 |
| Cohésion des cendres sous 500 volts (temps en minutes) | Essai n°1 | > 95 | 69 |
| | Essai n°2 | > 95 | 79 |
| | Essai n°3 | 49 | 73 |
| | Essai n°4 | > 95 | 82 |
| | Essai n°5 | > 95 | > 95 |
| | Essai n°6 | 77 | 57 |
| | Essai n°7 | > 95 | > 95 |
| | Essai n°8 | 66 | > 95 |
| | Essai n°9 | > 95 | > 95 |
| | Essai n°10 | 82 | > 95 |
| | Moyenne (minute) | 84 | 84 |
| | Bilan | 9/10 | 9/10 |
| | Taux de réussite | 90% | 90% |
| « Processabilité » | | | |
| 0-5 | | 5 | 2 |
| Opacité des fumées | | | |
| (% de transmission) | | 86% | 86% |

On fera noter que la présente invention permet de satisfaire le compromis recherché (« processabilité », céramisation, opacité des fumées, propriétés mécaniques).

De plus les propriétés mécaniques de l'élastomère selon l'invention avant et après vieillissement (10 jours à 200°C) sont améliorées de 20 à 30 % par rapport à l'exemple comparatif. On observe que la composition selon l'invention avant réticulation est non collante, alors que la composition de l'exemple comparatif est collante. Ainsi la mise en oeuvre de la composition selon l'invention est aisée comparée à celle de l'exemple comparatif.

## Revendications

1. Composition polyorganosiloxane vulcanisable à chaud en élastomère silicone, utilisable notamment dans le domaine de la fabrication de fils ou câbles électriques ayant un comportement au feu amélioré, comprenant:
a) au moins un polymère polyorganosiloxane ;
b) au moins une charge de renforcement ;
c) au moins un péroxyde organique;
d) du mica ;
e) de l'oxyde de zinc ;
f) éventuellement au moins un additif habituellement utilisé dans le domaine des compositions polyorganosiloxanes vulcanisables à chaud ;
g) du platine, un composé du platine et/ou un complexe du platine;
h) de l'oxyde de titane;
i) au moins une charge de bourrage;
j) éventuellement au moins une espèce minérale appartenant au groupe de la wollastonite, et
k) au moins une charge semi-renforçante k),
ladite composition étant **caractérisée en ce que** la charge semi-renforçante k) est choisie parmi le groupe constitué par:
- les poudres de kaolins calcinés, de préférence ayant subit un traitement chimique de surface,
- le talc,
- le carbonate de calcium traités ou non traités en surface, par exemple par des silanes vinylés, des silanes aminés ou des huiles silicones (réactives ou non), et
- leurs mélanges.

2. Compositions selon la revendication 1, **caractérisées en ce qu'**elles contiennent, sur la base de 100 parties en poids de polymère(s) polyorganosiloxane(s) a) :
- 15 à 100 parties de charge(s) de renforcement b),
- 0,2 à 8 parties de péroxyde organique c),
- 0,5 à 30 parties de mica d),
- 0,2 à 10 parties d'oxyde de zinc e),
- 0 à 15 parties d'additif(s) auxilliaire(s) f),
- 0,0005 à 0,02 parties d'ingrédient g) exprimé en poids de platine métal (élémentaire) (soit 5 ppm à 200 ppm),
- 0,5 à 10 parties d'oxyde de titane h),
- 20 à 100 parties de charge(s) de bourrage i),
- 0 à 10 parties d'espèce(s) j) appartenant au groupe de la wollastonite, et
- 1 à 100 parties de charge (s) semi-renforçante k), de préférence de 20 à 80 parties et encore plus préférentiellement de 40 à 70 parties,

3. Compositions selon les revendications 1 ou 2, **caractérisées en ce que** l'ingrédient a) consiste dans au moins un polymère polyorganosiloxane contenant de 0 à 4 % en poids de groupes vinyles et possédant une viscosité supérieure à 1 million de mPa.s à 25°C.

4. Compositions selon l'une quelconque des revendications 1 à 3, **caractérisées en ce que** l'ingrédient b) consiste dans la silice, l'alumine ou un mélange de ces deux espèces.

5. Compositions selon l'une quelconque des revendications 1 à 4, **caractérisées en ce que** l'ingrédient i) consiste dans au moins un trihydroxyde d'aluminium traité avec un organoalkoxysilane.

6. Compositions selon l'une quelconque des revendications 1 à 5, **caractérisées en ce que** l'ingrédient j), quand on en utilise un, consiste dans au moins une espèce choisie parmi : le métasilicate de calcium (CaSi03) ou wollastonite ; le métasilicate mixte de calcium et de sodium (NaCa₂HSi₃O₉) ou pectolite ; et le métasilicate mixte de calcium et de manganèse [CaMn(SiO₃)₂] ou bustamite.

7. Compositions selon l'une quelconque des revendications 1 à 6, **caractérisées en ce que** l'ingrédient facultatif f), quand on en utilise un, consiste dans : au moins un produit dit "antistructure" f1) ; et/ou au moins une résine polysiloxane f2) ; et/ou au moins un agent de stabilisation f3) ; et/ou au moins un pigment coloré f4) ; et/ou au moins un composé à base de bore f5).

8. Utilisation d'une composition selon l'une quelconque des revendications 1 à 7 pour la réalisation d'enveloppe ou isolant primaire de monoconducteur(s) entrant dans la constitution de fils ou câbles électriques protégés contre l'incendie, qui consiste à opérer le dépôt de ladite composition autour de chaque monoconducteur, puis à la faire réticuler en élastomère silicone par un chauffage procurant une température matière allant de 100°C à 200°C.

9. Fils ou câbles électriques protégés contre l'incendie fabriqués moyennant l'utilisation selon la revendication 8 d'une composition selon l'une quelconque des revendications 1 à 7.

10. Fils ou câbles électriques selon la revendication 9, **caractérisés en ce que** : (1) ils offrent une faible opacité de fumées permettant d'atteindre l'objectif de plus de 80 % de transmission de la lumière selon la norme CEI 61 034, partie 1 ; (2) ils satisfont à la norme "NFC 32-070 CR1" sous 500 volts.

## Claims

1. Polyorganosiloxane composition that can be vulcanized at high temperature to a silicone elastomer, usable especially in the field of the manufacture of electrical wires or cables having an improved fire performance, comprising:
a) at least one polyorganosiloxane polymer;
b) at least one reinforcing filler;
c) at least one organic peroxide;
d) mica;
e) zinc oxide;
f) optionally at least one additive customarily used in the field of high-temperature-vulcanizing polyorganosiloxane compositions;
g) platinum, a platinum compound and/or a platinum complex;
h) titanium oxide;
i) at least one bulking filler;
j) optionally at least one mineral species belonging to the wollastonite group; and
k) at least one semi-reinforcing filler k),
said composition being **characterized in that** the semi-reinforcing filler k) is chosen from the group composed of:
- calcined kaolin powders, preferably that have undergone a chemical surface treatment;
- talc;
- calcium carbonate that may or may not have been surface-treated, for example with vinylsilanes, aminosilanes or (reactive or unreactive) silicone oils; and
- mixtures thereof.

2. Compositions according to Claim 1, **characterized in that** they contain, based on 100 parts by weight of polyorganosiloxane polymer(s) a):
- 15 to 100 parts of reinforcing filler(s) b);
- 0.2 to 8 parts of organic peroxide c);
- 0.5 to 30 parts of mica d);
- 0.2 to 10 parts of zinc oxide e);
- 0 to 15 parts of auxiliary additive(s) f);
- 0.0005 to 0.02 parts of ingredient g) expressed by weight of (elemental) platinum metal (i.e. 5 ppm to 200 ppm);
- 0.5 to 10 parts of titanium oxide h);
- 20 to 100 parts of bulking filler(s) i);
- 0 to 10 parts of one or more species j) belonging to the wollastonite group; and
- 1 to 100 parts of semi-reinforcing filler(s) k), preferably from 20 to 80 parts and more preferably still from 40 to 70 parts.

3. Compositions according to either of Claims 1 and 2, **characterized in that** ingredient a) consists of at least one polyorganosiloxane polymer containing from 0 to 4% by weight of vinyl groups and possessing a viscosity of greater than 1 million mPa.s at 25°C.

4. Compositions according to any one of Claims 1 to 3, **characterized in that** ingredient b) consists of silica, alumina or a mixture of these two species.

5. Compositions according to any one of Claims 1 to 4, **characterized in that** ingredient i) consists of at least one aluminum trihydroxide treated with an organoalkoxysilane.

6. Compositions according to any one of Claims 1 to 5, **characterized in that** ingredient j), when one is used, consists of at least one species selected from: calcium metasilicate (CaSiO₃) or wollastonite; mixed calcium sodium metasilicate (NaCa₂HSi₃O₉) or pectolite; and mixed calcium manganese metasilicate [CaMn(SiO₃)₂] or bustamite.

7. Compositions according to any one of Claims 1 to 6, **characterized in that** optional ingredient f), when one is used, consists of: at least one "antistructuring" product f1); and/or at least one polysiloxane resin f2); and/or at least one stabilizing agent f3); and/or at least one colored pigment f4); and/or at least one boron-based compound f5).

8. Use of a composition according to any one of Claims 1 to 7, for the production of the sheath or primary insulation of one or more single conductors used in the construction of fire-resistant electrical wires or cables, which consists in depositing said composition around each single conductor and then in crosslinking it to a silicone elastomer by heating to a material temperature ranging from 100°C to 200°C.

9. Fire-resistant electrical wires or cables manufactured by the use according to Claim 8 of a composition according to any one of Claims 1 to 7.

10. Electrical wires or cables according to Claim 9, **characterized in that**: (1) they offer a low smoke density which makes it possible to attain more than 80% light transmittance in accordance with the standard IEC 61 034, part 1; (2) they meet the standard NFC 32-070 CR1 at 500 volts.

## Patentansprüche

1. Polyorganosiloxanzusammensetzung, die zu einem Silikonelastomer heißvulkanisiert werden kann und insbesondere auf dem Gebiet der Herstellung von elektrischen Drähten oder Kabeln mit verbessertem Brandverhalten verwendet werden kann, umfassend:
a) mindestens ein Polyorganosiloxanpolymer;
b) mindestens einen verstärkenden Füllstoff;
c) mindestens ein organisches Peroxid;
d) Glimmer;
e) Zinkoxid;
f) gegebenenfalls mindestens ein auf dem Gebiet der heißvulkanisierbaren Polyorganosiloxanzusammensetzungen üblicherweise verwendetes Additiv;
g) Platin, eine Platinverbindung und/oder einen Platinkomplex;
h) Titanoxid;
i) mindestens einen streckenden Füllstoff;
j) gegebenenfalls mindestens eine mineralische Spezies aus der Wollastonit-Gruppe und
k) mindestens einen halbverstärkeden Füllstoff k),
wobei die Zusammensetzung **dadurch gekennzeichnet ist, daß** der halbverstärkende Füllstoff k) aus der Gruppe bestehend aus:
- calcinierten Kaolinpulvern, die vorzugsweise einer chemischen Oberflächenbehandlung unterworfen worden sind,
- Talk,
- Calciumcarbonat, das oberflächenbehandelt ist oder nicht, beispielsweise mit Vinylsilanen, Aminosilanen oder (reaktiven oder nichtreaktiven) Silikonölen und
- Mischungen davon
ausgewählt ist.

2. Zusammensetzungen nach Anspruch 1, **dadurch gekennzeichnet, daß** sie, bezogen auf 100 Gewichtsteile Polyorganosiloxanpolymer(e) a):
- 15 bis 100 Teile eines oder mehrerer verstärkender Füllstoffe b),
- 0,2 bis 8 Teile organisches Peroxid c),
- 0,5 bis 30 Teile Glimmer d),
- 0,2 bis 10 Teile Zinkoxid e),
- 0 bis 15 Teile Hilfsadditiv(e) f),
- 0,0005 bis 0,02 Teile Bestandteil g), ausgedrückt in Gewicht von (elementarem) Platinmetall (d.h. 5 ppm bis 200 ppm),
- 0,5 bis 10 Teile Titanoxid h),
- 20 bis 100 Teile streckende(r) Füllstoff(e) i),
- 0 bis 10 Teile Spezies j) aus der Wollastonit-Gruppe und
- 1 bis 100 Teile halbverstärkende(n) Füllstoff(e) k), vorzugsweise 20 bis 80 Teile und noch weiter bevorzugt 40 bis 70 Teile,
enthalten.

3. Zusammensetzungen nach Anspruch 1 oder 2, **dadurch gekennzeichnet, daß** der Bestandteil a) aus mindestens einem Polyorganosiloxanpolymer mit 0 bis 4 Gew.-% Vinylgruppen und einer Viskosität von mehr als 1 Million mPa.s bei 25°C besteht.

4. Zusammensetzungen nach einem der Ansprüche 1 bis 3, **dadurch gekennzeichnet, daß** der Bestandteil b) aus Siliciumoxid, Aluminiumoxid oder einer Mischung dieser beiden Spezies besteht.

5. Zusammensetzungen nach einem der Ansprüche 1 bis 4, **dadurch gekennzeichnet, daß** der Bestandteil i) aus mindestens einem mit einem Organoalkoxysilan behandelten Aluminiumtrihydroxid besteht.

6. Zusammensetzungen nach einem der Ansprüche 1 bis 5, **dadurch gekennzeichnet, daß** der Bestandteil j), wenn er verwendet wird, aus mindestens einer unter Calciummetasilicat (CaSiO₃) bzw. Wollastonit; gemischtem Calciumnatriummetasilicat (NaCa₂HSi₃O₉) bzw. Pectolith und gemischtem Calciummanganmetasilicat [CaMn(SiO₃)₂] bzw. Bustamit ausgewählten Spezies besteht.

7. Zusammensetzungen nach einem der Ansprüche 1 bis 6, **dadurch gekennzeichnet, daß** der fakultative Bestandteil f), wenn er verwendet wird, aus mindestens einem "Antistruktur"-Produkt f1) und/oder mindestens einem Polysiloxanharz f2) und/oder mindestens einem Stabilisierungsmittel f3) und/oder mindestens einem Farbpigment f4) und/oder mindestens einer Verbindung auf Basis von Bor f5) besteht.

8. Verwendung einer Zusammensetzung nach einem der Ansprüche 1 bis 7 zur Herstellung einer Umhüllung oder Primärisolierung eines oder mehrerer einadriger Leiter, die beim Aufbau von brandgeschützten elektrischen Drähten oder Kabeln verwendet werden, bei dem man die Zusammensetzung um jeden einadrigen Leiter aufbringt und dann durch Erhitzen auf eine Materialtemperatur von 100°C bis 200°C zu einem Silikonelastomer vernetzt.

9. Brandgeschützte elektrische Drähte oder Kabel, hergestellt durch die Verwendung nach Anspruch 8 einer Zusammensetzung nach einem der Ansprüche 1 bis 7.

10. Brandgeschützte elektrische Drähte oder Kabel nach Anspruch 9, **dadurch gekennzeichnet, daß** sie (1) eine geringe Rauchdichte bieten, die die Erzielung von mehr als 80% Lichttransmission gemäß der IEC-Norm 61 034, Teil 1, ermöglicht; und (2) unter 500 Volt die Norm "NFC 32-070 CR1" erfüllen.
